# EUROPÄISCHE PATENTSCHRIFT

(11) **EP 1 471 295 B1**
(45) Veröffentlichungstag und Bekanntmachung des Hinweises auf die Patenterteilung: **18.08.2010**
(21) Anmeldenummer: 04004102.2
(22) Anmeldetag: 24.02.2004
(51) Int. Cl.: F16K 11/085

(54) **Sanitäres Mischventil**
Sanitary mixing valve
Mitigeur sanitaire

(30) Priorität: 10.04.2003 DE 10316372
(43) Veröffentlichungstag der Anmeldung: 27.10.2004
(73) Patentinhaber: HANSA METALLWERKE AG, 70567 Stuttgart (DE)
(72) Erfinder: Assenmacher, Bernd, 70597 Stuttgart (DE)
(74) Vertreter: Ostertag, Ulrich

(56) Entgegenhaltungen:
- EP-A- 0 769 643
- DE-U1- 7 819 641
- US-A- 1 035 472

## Beschreibung

Die Erfindung betrifft ein sanitäres Mischventil mit
a) einem Armaturenkörper, in dem eine zylindrische Kammer ausgebildet ist, in welche eine Kaltwasser führende Zulaufbohrung, eine Warmwasser führende Zulaufbohrung und mindestens eine Wasser abführende Bohrung einmünden;
b) einem in der Kammer des Armaturenkörpers drehbar geführten Drehkolben, der zwei axial beabstandete Ausnehmungen aufweist, die je nach Drehstellung des Drehkolbens in unterschiedliche Überlappung mit einer Mündung jeweils einer der beiden Zulaufbohrungen gebracht werden können;
   wobei
c) jede Ausnehmung eine Bodenfläche aufweist, die an dem Rand, der die Mündung der entsprechenden Zulaufbohrung beim Öffnen des entsprechenden Wasserweges zuerst anschneidet, unter einem Winkel, der kleiner als 20° ist, in die Mantelfläche des Drehkolbens übergeht und die sich mit zunehmender Winkelentfernung von diesem Rand bis zu einer maximalen Tiefe der Achse des Drehkolbens annähert.

Bei elektronisch gesteuerten Sanitärarmaturen erfolgt im allgemeinen nur das An- und Abstellen des Wasserflusses auf elektromagnetischem Wege. Soll dagegen das Mischungsverhältnis von Kalt- und Warmwasser und daher die Temperatur des ausfließenden Mischwassers verändert werden, so wird hierfür in der Regel ein gesondertes, manuell betätigtes Mischventil eingesetzt. Bei vom Markt her bekannten derartigen Mischventilen sind die Ausnehmungen, die im Drehkolben vorgesehen sind und die veränderliche Verbindung zwischen den Wasser-Zulaufbohrungen und dem nachgeschalteten Mischwasser führenden Strömungsweg herstellen, radial gerichtete Bohrungen, die mit verhältnismäßig scharfen Kanten in die Mantelfläche des Drehkolbens einmünden. Nachteilig bei diesen bekannten Mischventilen ist, daß in denjenigen Drehstellungen, in denen die Bohrungen des Drehkolbens die Mündungsstellen der Zulaufbohrungen in die Kammer nur wenig überlappen und daher nur ein geringer Strömungsquerschnitt zur Verfügung steht, ein störendes Pfeifen auftreten kann.

Ein sanitäres Mischventil der eingangs genannten Art ist aus der DE 78 19 641 U1 bekannt geworden. Dort ist ein Zylinder dreh- und axial verschiebbar in eine Ausnehmung des Armaturenkörpers eingesetzt, in welche zwei beabstandete Zuläufe für Warmund Kaltwasser münden. Der Zylinder weist zwei Nuten auf, welche in axialer Richtung einen Abstand haben, der geringer ist als der der Zuläufe. Beide Nuten verlaufen gleichsinnig und parallel zueinander und haben im Querschnitt etwa sichelförmige Gestalt, wobei der Übergang zur Mantelfläche des Zylinders an einer Seite unter einem sehr kleinen Winkel erfolgt. Die Nuten werden dann zunächst konisch tiefer und enden nach etwa 300° stufenartig. Radial außen schließt sich an die Nuten ein gemeinsamer Auslaufraum an.

Die Temperaturwahl erfolgt bei diesem bekannten Mischventil durch axiale Verschiebung des Zylinders, wodurch von reiner Kaltwasser- bis zu reiner Warmwasserfreigabe alle Zwischenstufen möglich sind. Den Gesamtwasserfluß wählt man durch Drehen des Zylinders, so daß schleichend ein immer größer werdender Querschnitt über die Nuten freigegeben wird. Beim Übergang von der Nut im Zylinder zum Auslaufraum ergibt sich allerdings eine sprungartige Vergrößerung des Strömungsquerschnitts. Dies trifft auch zu bei Änderung der Temperatureinstellung während des Wasserflusses infolge der dann wirksamen scharfen Kanten. Beides kann zu störendem Pfeifen führen.

Aufgabe der vorliegenden Erfindung ist es, ein sanitäres Mischventil der eingangs genannten Art der Art so auszugestalten, daß die Geräuschentwicklung reduziert ist.

Diese Aufgabe wird erfindungsgemäß dadurch gelöst, daß
d) jede Ausnehmung mit je einer Wasser abführenden Bohrung kommuniziert.

Wird beim Verdrehen des Drehkolbens des erfindungsgemäßen Mischventiles die Mündung jeder der beiden Zulaufbohrungen in der Kammer durch die axialen Abstand aufweisenden Ausnehmungen angeschnitten, so öffnen sich zunächst sehr kleine und dann graduell kontinuierlich größer werdende Strömungsquerschnitte. Dieses "feinfühlige" Öffnen des Strömungsquerschnittes in Verbindung mit einer direkt zugeordneten Wasser abführenden Bohrung verhindert, daß sich Pfeifgeräusche einstellen.

Die Unterdrückung von Pfeifgeräuschen ist um so vollkommener, je "flacher" die Bodenfläche der Ausnehmung in die Mantelfläche übergeht. Besonders günstige Ergebnisse werden daher erzielt, wenn der Winkel, unter dem dies geschieht, kleiner als 10° ist oder wenn gar die Bodenfläche der Ausnehmung tangential in die Mantelfläche einläuft.

Im allgemeinen empfiehlt sich diejenige Ausgestaltung der Erfindung, bei welcher die Bodenflächen der zwei Ausnehmungen sich in entgegengesetztem Drehsinn der Achse des Drehkolbens annähern und von denen die eine mit der Kaltwasser führenden Zulaufbohrung und die andere mit der Warmwasser führenden Zulaufbohrung kommuniziert. Jede dieser beiden Ausnehmungen ist also für das Steuern eines zufließenden Wasserstromes zuständig. Die "Logik" der Wasserführung ähnelt in sofern derjenigen, die bei dem eingangs zuerst genannten, vom Markt her bekannten Stand der Technik eingesetzt wird. Infolge des entgegengesetzten Drehsinns der Ausnehmungen bleibt der Gesamtdurchfluß an Wasser näherungsweise konstant.

Wird eine solche Ausgestaltung der Erfindung verwendet, empfiehlt sich weiter, daß der Drehkolben in seiner Mantelfläche zwischen den beiden Ausnehmungen eine Nut aufweist, die in axialer Richtung mit den beiden Ausnehmungen kommuniziert und eine Verbindung zu den zwei Mischwasser abführenden Bohrungen herstellt. Auf diese Weise lassen sich insbesondere bei ungleichem Zulauf von Kalt- und Warmwasser die Strömungsquerschnitte beider wasserabführender Bohrungen nutzen und die Strömungsgeschwindigkeiten reduzieren. Diese Nut dient darüber hinaus der zumindest beginnenden Vermischung von Kalt- und Warmwasser.

Eine besonders zweckmäßige Ausgestaltung des sanitären Mischventils ergibt sich dadurch, daß die zwei Wasser abführenden Bohrungen koaxial zu den korrespondierenden Zulaufbohrungen ausgebildet sind. Dadurch wird die Herstellung vereinfacht.

Ein solches Mischventil eignet sich besonders zum Einbau in eine elektronisch gesteuerte Sanitärarmatur.

Ein Ausführungsbeispiel der Erfindung wird nachstehend anhand der Zeichnung näher erläutert; es zeigen
- Figuren 1 a) bis 1c): Schnitte durch den Armaturenkörper einer elektronisch gesteuerten Sanitärarmatur im Bereich des dort vorgesehenen Mischventils, und zwar in unterschiedlichen Stellungen des zugehörigen Drehkolbens;
- Figur 2: perspektivisch in vergrößertem Maßstab den Drehkolben, der bei dem Mischventil der in Figur 1 dargestellten Sanitärarmatur einge- setzt wird.

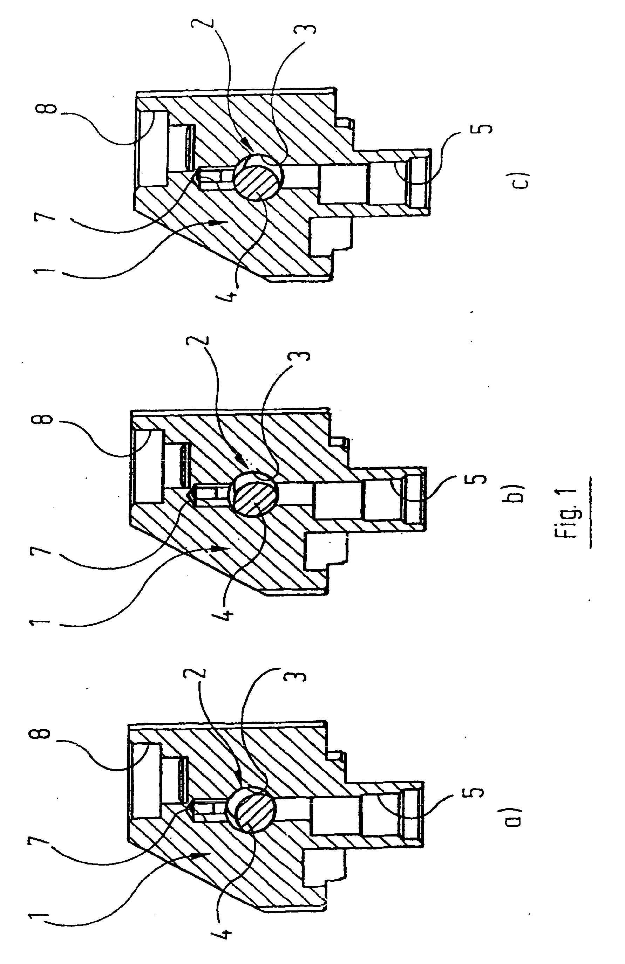

Zunächst wird auf Figur 1a) Bezug genommen. Diese zeigt einen in der Montagestellung vertikalen Schnitt durch den Armaturenkörper 1 einer elektronisch gesteuerten Sanitärarmatur. Unter "elektronisch gesteuert" wird hier verstanden, daß das Öffnen und Schließen der Sanitärarmatur selbsttätig, also ohne Zutun des Benutzers geschieht. Dies kann durch unterschiedliche Arten von berührungslosen Annäherungsschaltern, beispielsweise durch eine Reflexionslichtschranke geschehen. Um die Temperatur des aus der Sanitärarmatur ausfließenden Wassers einstellen zu können, ist in den Armaturenkörper 1 ein Mischventil 2 integriert, das nachfolgend näher beschrieben wird.

Dieses Mischventil 2 umfasst eine in der Montagestellung etwa horizontal verlaufende zylindrische Kammer 3, in welcher ein Drehkolben 4 (häufig auch "Reiber" genannt) verdrehbar angeordnet ist. Die genaue Bauweise des Drehkolbens 4 wird weiter unten näher erläutert.

In die Kammer 3 münden von unten her zwei Zulaufbohrungen 5 für Wasser, nämlich die in Figur 1 erkennbare Zulaufbohrung 5 für Warmwasser und eine parallel zu dieser verlaufende, oberhalb der Zeichenebene von Figur 1 zu denkende Zulaufbohrung 5 für Kaltwasser. Die Zulaufbohrungen 5 werden an ihren unteren Enden mit Wasserzulaufrohren oder -schläuchen verbunden, wie dies an und für sich bekannt ist.

In denjenigen Bereichen der Mantelfläche der Kammer 3, welche den Mündungen der Zulaufbohrungen 5 diametral gegenüberliegen, mündet jeweils eine Verbindungsbohrung 7, die zu der korrespondierenden Zulaufbohrung 5 koaxial ist. Die Verbindungsbohrungen 7 stehen über innere, im einzelnen nicht dargestellte Wasserwege mit dem elektronisch betätigten Absperrventil in Verbindung, von wo das Wasser über ebenfalls nicht dargestellte Wege zu einer an der Oberseite des Armaturenkörpers 1 vorgesehenen Auslauföffnung 8 gelangt. In dieser Auslauföffnung 8 kann beispielsweise ein Auslauf (nicht dargestellt) montiert werden, über den das Wasser dann schlußendlich die Armatur verläßt.

Durch Verdrehen des Drehkolbens 4 kann das Mengenverhältnis des über die Zulaufbohrungen 5 zufließenden Kaltund Warmwassers in folgender Weise eingestellt werden:

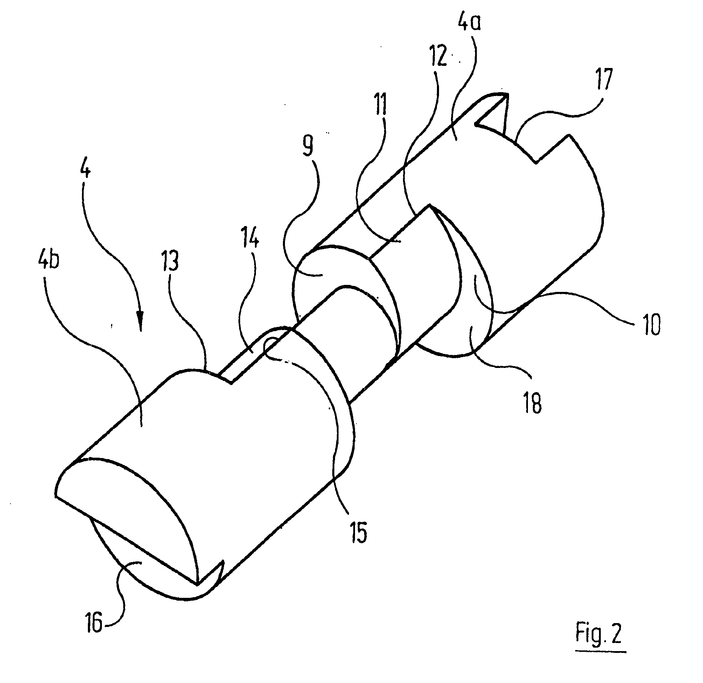

Wie insbesondere die Darstellung des Drehkolbens 4 in Figur 2 deutlich macht, besitzt dieser die Grundform eines Zylinders, dessen Außendurchmesser dem Innendurchmesser der Kammer 3 im Armaturenkörper 1 entspricht. In der axialen Mitte zwischen den beiden gegenüberliegenden Enden des Drehkolbens 4 ist eine verhältnismäßig tiefe Nut 9 eingearbeitet.

In den in Figur 2 vom Betrachter abgewandten Bereich 4a des Drehkolbens 4 ist, der Nut 9 benachbart und mit dieser in axialer Richtung in Verbindung stehend, eine Ausnehmung 10 eingeformt, die eine gekrümmte Bodenfläche 11 bestitzt. Die Bodenfläche 11 hat ihren Anfang an einem achsparallel verlaufenden Rand 12 an der Mantelfläche des Drehkolbens 4, wo sie mit der Mantelfläche einen Winkel von weniger als 20° einschließt. Sie nähert sich auf einem Winkel von etwas mehr als 180° im Uhrzeigersinn dem Durchmesser, auf dem sich der Grund der Nut 9 befindet. Die von der Nut 9 abgewandte Seitenfläche 13 der Ausnehmung 10 hat daher ungefähr die Gestalt einer Sichel. An dem dem Rand 12 gegenüberliegenden Ende der Ausnehmung 10 ist deren Bodenfläche 11 verhältnismäßig steil wieder zur Mantelfläche des Bereiches 4a des Drehkolbens 4 zurückgeführt, wie dies den Figuren 1a bis 1c zu entnehmen ist.

Auch in den in Figur 2 dem Betrachter zugewandten Bereich 4b des Drehkolbens 4 ist eine Ausnehmung 13 eingeformt, die in axialer Richtung mit der Nut 9 in Verbindung steht. Die Bodenfläche 14 beginnt ebenfalls an einem achsparallel verlaufenden Rand 15 an der Mantelfläche des Bereiches 4b, der mit dem Rand 12 im Bereich 4a fluchtet. Während jedoch die Ausnehmung 10 in der Sicht der Figur 2 im Uhrzeigersinn tiefer wird, verhält sich dies bei der Ausnehmung 13 gerade umgekehrt: Die Ausnehmung 13 verläuft, ausgehend von dem Rand 15 in der Sicht der Figur 2 gegen den Uhrzeigersinn zunächst unter einem Winkel von weniger als 20° gegenüber der Mantelfläche und wird sodann über einen Winkel von etwas mehr als 180° zunächst progressiv tiefer, bis auch ihre Bodenfläche 14 verhältnismäßig steil wieder zur Mantelfläche des Bereiches 4b des Drehkolbens 4 zurückgeführt ist. Bezogen auf diejenige Ebene, welche durch die Ränder 12 und 15 sowie die Achse des Drehschiebers 4 verläuft, sind die Ausnehmungen 10, 13 also spiegelsymmetrisch, jedoch in axialer Richtung gegeneinander versetzt, ausgebildet.

Ist der Drehkolben 4 in der Kammer 3 des Armaturenkörpers 1 montiert, befindet sich seine Ausnehmung 10 in derjenigen axialen Position, in welcher die Zulaufbohrung 5 und die hierzu koaxiale Verbiundungsbohrung 7 für Warmwasser in die Kammer 3 münden, die Ausnehmung 13 dagegen in derjenigen axialen Position, in der die Kaltwasser führende Zulaufbohrung 5 und die hierzu koaxiale Verbindungsbohrung 7 in die Kammer 3 münden.

An den gegenüberliegenden Stirnseiten besitzt der Drehkolben 4 Profilierungen 16 bzw. 17, die der Befestigung des Drehkolbens 4 im Armaturenkörper 1 und dem Ansetzen eines Griffes dienen, mit dem der Drehkolben 4 verdreht werden kann.

Die Funktionsweise des Mischventiles 2 läßt sich anhand der Figuren 1a bis 1c wie folgt erklären:

In Figur 1a ist eine Drehposition des Drehkolbens 4 dargestellt, bei welcher die Mantelfläche des Bereiches 4a des Drehkolbens 4 die Mündung der Warmwasser führenden Zulaufbohrung 5 in die Kammer 3 vollständig abdeckt. Dies bedeutet, daß kein Warmwasser in die Kammer 3 eintreten und von dort über die inneren Strömungswege zur Auslauföffnung 8 (auch bei geöffnetem elektronisch betätigtem Absperrwentil) fließen kann.

Anders dagegen die Verhältnisse bei der vor der Zeichenebene der Figur 1a zu denkenden Zulaufbohrung 5 für Kaltwasser: Da die Ausnehmung 13 in dem Bereich 4b des Drehkolbens 4 gegenüber der Ausnehmung 10 im Bereich 4a winkelmäßig versetzt ist, liegt diese Ausnehmung 13 bei der in Figur 4a dargestellten Drehstellung des Drehkolbens 4 über der Mündung der Kaltwasser-Zulaufbohrung 5 in die Kammer 3. Das kalte Wasser kann daher über die Ausnehmung 13 einerseits zu der koaxialen Verbindungsbohrung 7 und andererseits zu der Nut 9 des Drehkolbens 4 und von dort über die andere Verbindungsbohrung 7 zur Auslauföffnung 8 strömen. Die in Figur 1a dargestellte Position ist also diejenige, in der ausschließlich Kaltwasser zur Auslauföffnung 8 gelangt.

Wird nunmehr in der Sicht der Figur 1 der Drehkolben 4 im Uhrzeigersinn verdreht, so wandert die Ausnehmung 10 des Bereiches 4a des Drehkolbens 4 zunehmend über die Mündung der Warmwasser führenden Zulaufbohrung 5 in die Kammer 3, wie dies in Figur 1b dargestellt ist. Auf Grund der sich nur langsam absenkenden Bodenfläche 11 der Ausnehmung 10 wird dabei der Strömungsweg nur allmählich eröffnet, was Strömungs- und insbesondere Pfeifgeräusche zuverlässig unterdrückt. In gleichem Ausmaße, in dem der Strömungsweg des warmen Wassers über die Ausnehmung 10 zu der zur Warmwasser führenden Zulaufbohrung 5 koaxialen Verbindungsbohrung 7 sowie in die Nut 9 und von dort über die andere Verbindungsbohrung 7 zur Auslauföffnung 8 eröffnet wird, schließt sich der Strömungsquerschnitt, der dem kalten Wasser über die Ausnehmung 13 im Bereich 4b auf dem Weg zur Auslauföffnung 8 zur Verfügung steht. Auf Grund der gegensinnig gleichen Ausgestaltung der Ausnehmungen 10 und 13 nimmt die Menge des fließenden Kaltwassers in demselben Ausmaße ab, in dem Warmwasser zu strömen beginnt. Figur 1b zeigt also eine Mischstellung des Mischventiles 2.

Wird die Drehung des Drehkolbens 4 im Uhrzeigersinn fortgesetzt, so gelangt man schließlich in diejenige Position, die in Figur 1c dargestellt ist. In dieser ist die gesamte Mündung der Zulaufbohrung 5, die Warmwasser führt, von der Ausnehmung 11 im Bereich 4a des Drehkolbens 4 freigegeben, so daß die Strömung des Warmwassers aus dieser Zulaufbohrung 5 in die hierzu koaxiale Verbindungsbohrung 7 sowie in die Nut 9 und von dort über die andere Verbindungsbohrung 7 zur Auslauföffnung 8 praktisch nicht mehr behindert ist. Umgekehrt gibt es in dieser Drehstellung des Drehkolbens 4 keine Überlappung mehr zwischen der Ausnehmung 13 im Bereich 4b des Drehkolbens 4 und der Mündung der Zulaufbohrung 5 für kaltes Wasser in die Kammer 3, so daß die Strömung des kalten Wassers vollständig zum Erliegen kommt. Die in Figur 1c dargestellte Position des Drehkolbens 4 ist also diejenige, in der ausschließlich Warmwasser fließt, die Temperatur des die Sanitärarmatur verlassenden Wassers also ihren höchstmöglichen Wert erreicht hat.

## Patentansprüche

1. Sanitäres Mischventil mit
a) einem Armaturenkörper (1), in dem eine zylindrische Kammer (3) ausgebildet ist, in welche eine Kaltwasser führende Zulaufbohrung (5), eine Warmwasser führende Zulaufbohrung (5) und mindestens eine Wasser abführende Bohrung (7) einmünden;
b) einem in der Kammer (3) des Armaturenkörpers (1) drehbar geführten Drehkolben (4), der zwei axial beabstandete Ausnehmungen (10, 13) aufweist, die je nach Drehstellung des Drehkolbens (4) in unterschiedliche Überlappung mit einer Mündung jeweils einer der beiden Zulaufbohrungen (5) gebracht werden können;
wobei
c) jede Ausnehmung (10, 13) eine Bodenfläche (11, 14) aufweist, die an dem Rand (12, 15), der die Mündung der entsprechenden Zulaufbohrung (5) beim Öffnen des entsprechenden Wasserweges zuerst anschneidet, unter einem Winkel, der kleiner als 20° ist, in die Mantelfläche des Drehkolbens (4) übergeht und die sich mit zunehmender Winkelentfernung von diesem Rand (12, 15) bis zu einer maximalen Tiefe der Achse des Drehkolbens (4) annähert;
**dadurch gekennzeichnet, daß**
d) jede Ausnehmung (10, 13) mit je einer Wasser abführenden Bohrung (7) kommuniziert.

2. Sanitäres Mischventil nach Anspruch 1, **dadurch gekennzeichnet, daß** die Bodenfläche (11, 14) der Ausnehmung (10, 13) unter einem Winkel, der kleiner als 10° ist, in die Mantelfläche des Drehkolbens (4) übergeht.

3. Sanitäres Mischventil nach Anspruch 1, **dadurch gekennzeichnet, daß** die Bodenfläche (11, 14) der Ausnehmung (10, 13) tangential in die Mantelfläche des Drehkolbens (4) übergeht.

4. Sanitäres Mischventil nach einem der Ansprüche 1 bis 3, **dadurch gekennzeichnet, daß** die Bodenflächen (11, 14) der zwei Ausnehmungen (10, 13) sich in entgegengesetztem Drehsinn der Achse des Drehkolbens (4) annähern, wobei die eine Ausnehmung (13) mit der Kaltwasser führenden Zulaufbohrung (5) und die andere Ausnehmung (10) mit der Warmwasser führenden Zulaufbohrung (5) kommuniziert.

5. Sanitäres Mischventil nach Anspruch 4, **dadurch gekennzeichnet, daß** der Drehkolben (4) in seiner Mantelfläche zwischen den beiden Ausnehmungen (10, 13) eine Nut (9) aufweist, die in axialer Richtung mit den beiden Ausnehmungen (10, 13) kommuniziert und so eine Verbindung zu den zwei Wasser abführenden Bohrungen (7) herstellt.

6. Sanitäres Mischventil nach einem der vorhergehenden Ansprüche, **dadurch gekennzeichnet, daß** die Wasser abführenden Bohrungen (7) koaxial zu den korrespondierenden Zulaufbohrungen (5) ausgebildet sind.

7. Sanitäres Mischventil nach einem der vorhergehenden Ansprüche, **dadurch gekennzeichnet, daß** es zum Einbau in eine elektronisch gesteuerte Sanitärarmatur vorgesehen ist.

## Claims

1. A sanitary mixing valve with
a) a fitting body (1) in which a cylindrical chamber (3) is formed, into which open an inlet bore (5) which carries cold water, an inlet bore (5) which carries hot water and at least one bore (7) which carries away water;
b) a rotary piston (4) which is guided rotatably in the chamber (3) of the fitting body (1), which piston has two axially spaced-apart cutouts (10, 13) which, depending on the rotary position of the rotary piston (4), can be brought into different overlapping positions with an opening of one of the two inlet bores (5) in each case;
wherein
c) each cutout (10, 13) has a base surface (11, 14) which, at the edge (12, 15) which first broaches the opening of the corresponding inlet bore (5) upon opening of the corresponding water path, merges at an angle of less than 20° into the generated surface of the rotary piston (4) and which with increasing angular distance from this edge (12, 15) approaches the axis of the rotary piston (4) up to a maximum depth;
**characterised in that**
d) each cutout (10, 13) communicates with one bore (7) which carries away water in each case.

2. A sanitary mixing valve according to Claim 1, **characterised in that** the base surface (11, 14) of the cutout (10, 13) merges into the generated surface of the rotary piston (4) at an angle of less than 10°.

3. A sanitary mixing valve according to Claim 1, **characterised in that** the base surface (11, 14) of the cutout (10, 13) merges tangentially into the generated surface of the rotary piston (4).

4. A sanitary mixing valve according to one of Claims 1 to 3, **characterised in that** the base surfaces (11, 14) of the two cutouts (10, 13) approach the axis of the rotary piston (4) in opposing directions of rotation, the one cutout (13) communicating with the inlet bore (5) which carries cold water and the other cutout (10) with the inlet bore (5) which carries hot water.

5. A sanitary mixing valve according to Claim 4, **characterised in that** the rotary piston (4) has in its generated surface between the two cutouts (10, 13) a groove (9) which communicates in the axial direction with the two cutouts (10, 13) and thus brings about a connection to the two bores (7) which carry away water.

6. A sanitary mixing valve according to one of the preceding claims, **characterised in that** the bores (7) which carry away water are formed coaxially to the corresponding inlet bores (5).

7. A sanitary mixing valve according to one of the preceding claims, **characterised in that** it is intended for installation in an electronically controlled sanitary fitting.

## Revendications

1. Mitigeur sanitaire avec
a) un corps de robinetterie (1) dans lequel est configurée une chambre cylindrique (3), dans laquelle débouchent un perçage d'arrivée (5) amenant l'eau froide, un perçage d'arrivée (5) amenant l'eau chaude et au moins un perçage (7) évacuant l'eau ;
b) un piston rotatif (4) guidé à rotation dans la chambre (3) du corps de robinetterie (1), piston qui présente deux évidements (10, 13) axialement distants qui, selon la position de rotation du piston rotatif (4), peuvent être amenés en un recouvrement différent avec une embouchure d'un perçage respectif parmi les deux perçages d'arrivée (5) ;
sachant que
c) chaque évidement (10, 13) présente une surface de fond (11, 14), qui se raccorde à la surface d'enveloppe du piston rotatif (4) sous un angle inférieur à 20° sur le bord (12, 15) qui coupe le premier l'embouchure du perçage d'arrivée correspondant (5) lors de l'ouverture de la voie d'eau correspondante, et qui, avec l'augmentation de la distance angulaire par rapport à ce bord (12, 15), s'approche jusqu'à une profondeur maximale de l'axe du piston rotatif (4) ;
**caractérisé en ce que**
d) chaque évidement (10, 13) communique avec un perçage respectif (7) évacuant l'eau.

2. Mitigeur sanitaire selon la revendication 1, **caractérisé en ce que** la surface de fond (11, 14) de l'évidement (10, 13) se raccorde à la surface d'enveloppe du piston rotatif (4) sous un angle qui est inférieur à 10°.

3. Mitigeur sanitaire selon la revendication 1, **caractérisé en ce que** la surface de fond (11, 14) de l'évidement (10, 13) se raccorde tangentiellement à la surface d'enveloppe du piston rotatif (4).

4. Mitigeur sanitaire selon l'une des revendications 1 à 3, **caractérisé en ce que** les surfaces de fond (11, 14) des deux évidements (10, 13) se rapprochent dans des sens de rotation opposés de l'axe du piston rotatif (4), sachant que l'un (13) des évidements communique avec le perçage d'arrivée (5) amenant l'eau froide et que l'autre évidement (10) communique avec le perçage d'arrivée (5) amenant l'eau chaude.

5. Mitigeur sanitaire selon la revendication 4, **caractérisé en ce que** le piston rotatif (4) présente dans sa surface d'enveloppe, entre les deux évidements (10, 13), une rainure (9) qui communique en direction axiale avec les deux évidements (10, 13) et réalise ainsi une liaison vers les deux perçages (7) évacuant l'eau.

6. Mitigeur sanitaire selon l'une des revendications précédentes, **caractérisé en ce que** les perçages (7) évacuant l'eau sont configurés coaxialement aux perçages d'arrivée correspondants (5).

7. Mitigeur sanitaire selon l'une des revendications précédentes, **caractérisé en ce qu'**il est prévu pour être monté dans une robinetterie sanitaire à commande électronique.
